# NEUE EUROPÄISCHE PATENTSCHRIFT

(11) **EP 4 000 374 B2**
(45) Veröffentlichungstag und Bekanntmachung des Hinweises auf die Entscheidung über den Einspruch: **11.11.2026**
(45) Hinweis auf die Patenterteilung: 31.01.2024
(21) Anmeldenummer: 21195452.4
(22) Anmeldetag: 08.09.2021
(51) Int. Cl.: A01D 41/127, A01D 43/063, G06F 3/06, G06F 3/14

(54) **SYSTEM ZUR ANZEIGE VON ANZEIGEOBJEKTEN**
DISPLAY OBJECT DISPLAY SYSTEM
SYSTÈME D'AFFICHAGE DES OBJETS D'AFFICHAGE

(30) Priorität: 18.11.2020 DE 102020130449
(43) Veröffentlichungstag der Anmeldung: 25.05.2022
(73) Patentinhaber: CLAAS E-Systems GmbH, 49201 Dissen (DE)
(72) Erfinder: Meyer zu Helligen, Lars Peter, 32139 Spenge (DE)
(74) Vertreter: CLAAS Gruppe

(56) Entgegenhaltungen:
- EP-A1- 2 165 591
- EP-A1- 2 583 544
- EP-A2- 2 698 701
- DE-A1- 102020 203 220
- US-A- 5 978 720
- US-A1- 2014 053 092
- US-A1- 2014 088 840
- US-A1- 2014 277 614
- US-B2- 10 575 454

## Beschreibung

Die Erfindung betrifft ein System zur Anzeige von Anzeigeobjekten auf einem Display in einer landwirtschaftlichen Arbeitsmaschine, insbesondere einer selbstfahrenden landwirtschaftlichen Arbeitsmaschine.

Eine landwirtschaftliche Arbeitsmaschine ist bspw. ein Traktor, ein Mähdrescher oder ein Feldhäcksler.

Aus der US2014277614A1 ist eine konfigurierbare Nutzerschnittstelle bekannt, bei der der Nutzer aus einer Vielzahl von Rückmeldeoptionen die Nutzerschnittstelle konfigurieren kann.

Bei der Nutzung einer landwirtschaftlichen Arbeitsmaschine werden in unterschiedlichen Situationen häufig unterschiedliche Informationen benötigt. Der Nutzer wird daher eine Nutzerschnittstelle mit allen Informationen konfigurieren. Eine solche Anzeige wird sehr unübersichtlich und wenig ergonomisch ausfallen.

Aufgabe der Erfindung ist es ein verbessertes konfigurierbares Anzeigesystem bereitzustellen.

Gelöst wird die Aufgabe durch ein System zur Anzeige von Anzeigeobjekten auf einem Display in einer landwirtschaftlichen Arbeitsmaschine, umfassend eine Anzeigeeinheit, eine Bedieneinheit und eine Recheneinheit, die dazu vorgesehen und eingerichtet ist mittels der Anzeigeeinheit eine Vielzahl von Anzeigeobjekten anzubieten und mittels der Bedieneinheit eine Auswahl von zumindest einem Anzeigeobjekt entgegenzunehmen, wobei die Recheneinheit dazu vorgesehen und eingerichtet ist mittels der Anzeigeeinheit eine Vielzahl von Triggern anzubieten und mittels der Bedieneinheit eine Auswahl von zumindest einem Trigger entgegenzunehmen und den ausgewählten Trigger mit dem ausgewählten Anzeigeobjekt zu verknüpfen, wobei die Recheneinheit dazu vorgesehen und eingerichtet ist eine Triggerüberwachungseinheit auf eine Überwachung des zumindest einen ausgewählten Triggers zu konfigurieren und die Triggerüberwachungseinheit dazu vorgesehen und eingerichtet ist bei einer Aktivierung des überwachten Triggers eine Anzeige des mit dem überwachten Trigger verknüpften Anzeigeobjektes auf dem Display in der landwirtschaftlichen Arbeitsmaschine auszulösen.

Durch die Verknüpfung mit einem Trigger wird das ausgewählte Anzeigeobjekt genau dann auf dem Display der Arbeitsmaschine angezeigt, wenn es benötigt wird. Der Nutzer kann dadurch auswählen wann welche Informationen auf dem Display angezeigt werden sollen.

Die Anzeigeeinheit, die Bedieneinheit und die Recheneinheit können Teil der Arbeitsmaschine sein oder von der Arbeitsmaschine entkoppelt sein, bspw. als Teil eines Personal Computers. So ist es möglich die Konfiguration entweder direkt auf der Arbeitsmaschine vorzunehmen oder die Konfiguration an einem Personal Computer vorzunehmen und die Konfiguration auf die Arbeitsmaschine zu übertragen.

Die Triggerüberwachungseinheit und das Display sind Teil der Arbeitsmaschine. Das Display kann gleichzeitig als Anzeigeeinheit dienen. Falls das Display als Touchdisplay ausgestaltet ist, kann das Display gleichzeitig als Bedieneinheit dienen. Die Triggerüberwachungseinheit kann gleichzeitig als Recheneinheit dienen.

In einer bevorzugten Ausgestaltung ist die Recheneinheit dazu vorgesehen und eingerichtet dem Nutzer eine Vielzahl an logischen Operatoren mittels der Anzeigeeinheit zur Verknüpfung mit einem oder mehreren ausgewählten Triggern zu einem logischen Ausdruck anzubieten, über die Bedieneinheit eine Auswahl von logischen Operatoren und Verknüpfungen entgegenzunehmen, eine Verknüpfung der ausgewählten Trigger mit den logischen Operatoren zu einem logischen Ausdruck vorzunehmen, und den logischen Ausdruck als ausgewählten Trigger zu speichern.

Logische Operatoren sind bspw. "und", "oder" und "nicht". Durch die Verknüpfung mehrerer Trigger mit logischen Operatoren lassen komplexe logische Ausdrücke als Trigger definieren. Dadurch lassen sich wesentlich besser Situationen definieren in denen bestimmte Anzeigeobjekte angezeigt werden sollen.

In einer bevorzugten Ausgestaltung ist die Recheneinheit dazu vorgesehen und eingerichtet dem Nutzer eine Vielzahl an logischen Ausdrücken mittels der Anzeigeeinheit anzubieten und über die Bedieneinheit eine Auswahl von zumindest einem logischen Ausdruck entgegenzunehmen und den logischen Ausdruck als ausgewählten Trigger zu speichern.

Durch vorgefertigte logische Ausdrücke wird es dem Nutzer erleichtert Trigger zu definieren. Es versteht sich, dass die vorgefertigten logischen Ausdrücke über logische Operatoren mit weiteren Triggern oder logischen Operatoren verknüpft werden können.

In einer bevorzugten Ausgestaltung weist die landwirtschaftliche Arbeitsmaschine zumindest ein Bedienelement auf und ein Trigger ist eine Betätigung des Bedienelementes.

Durch die Nutzung eines Bedienelementes als Trigger lässt sich die Anzeige von Anzeigeobjekten mit der Betätigung des Bedienelementes verknüpfen. Es versteht sich, dass das Bedienelement weiterhin seine normale Funktion ausführen kann. So kann das Bedienelement bspw. ein Hebel zur Verstellung einer Hydraulikfunktion sein und das Anzeigeobjekt die aktuelle Stellung der Hydraulikfunktion sein. Wird der Hebel betätigt, so wird die Stellung der Hydraulik auf dem Display angezeigt. Alternativ kann das Bedienelement eine Spritze aktivieren und das Anzeigeobjekt den aktuellen Füllstand des Spritzentanks anzeigen. Wird die Spritze aktiviert, so wird der aktuelle Füllstand des Spritzentanks angezeigt.

Es ist auch möglich ein mobiles Gerät, bspw. ein Smartphone oder ein Tablet, als zusätzliches Display zu nutzen und auf dem mobilen Gerät Anzeigeobjekte und/oder Bedienelemente darzustellen. Falls der Nutzer ein mobiles Gerät nutzen möchte, kann er das Display des mobilen Gerätes genauso konfigurieren wie das Display der Arbeitsmaschine. Alternativ kann die Konfiguration des Displays der Arbeitsmaschine auf das Display des mobilen Gerätes gespiegelt werden.

In einer erfindungsgemäßen Ausgestaltung weist die landwirtschaftliche Arbeitsmaschine eine Vielzahl an Bedienelementen und eine Vielzahl an Bedienfunktionen auf und die Recheneinheit ist dazu vorgesehen und ein gerichtet dem Nutzer eine Vielzahl an Bedienelementen mittels der Anzeigeeinheit anzubieten, dem Nutzer eine Vielzahl an Bedienfunktionen mittels der Anzeigeeinheit anzubieten, über die Bedieneinheit eine Auswahl von einem Bedienelement und einer Bedienfunktion entgegen zunehmen, die ausgewählte Bedienfunktion und das ausgewählte Bedienelement mit dem ausgewählten Trigger so zu verknüpfen, dass bei Eintreten des mindestens einen ausgewählten Triggers die ausgewählte Bedienfunktion mit dem ausgewählten Bedienelement aktiviert werden kann.

Die Verknüpfung von Bedienfunktionen mit Bedienelementen und Triggern ermöglicht es die Bedienung der Arbeitsmaschine automatisch der jeweiligen Arbeitssituation anzupassen. Ein einzelnes Bedienelement kann so Triggergesteuert mit unterschiedlichen Bedienfunktionen belegt werden. Insbesondere kann das Bedienelement ein virtuelles Bedienelement, das auf einem Touchscreen angezeigt wird, sein.

In einer bevorzugten Ausgestaltung weist die landwirtschaftliche Arbeitsmaschine mindestens eine Maschinenfunktion auf und der Trigger ist die Aktivierung der Maschinenfunktion der landwirtschaftlichen Arbeitsmaschine. Die Aktivierung der Maschinenfunktion kann dabei manuell oder automatisiert geschehen.

Durch die Nutzung von Maschinenfunktionen als Trigger können zur Maschinenfunktion passende Anzeigeobjekte angezeigt werden. Bspw. kann ein automatisches Lenksystem in der Nähe des Vorgewendes automatisch eine Funktion zum automatischen Wenden aktivieren. Wenn dies geschieht können automatisch vom Nutzer ausgewählte Anzeigeobjekte dargestellt werden. Dies können bspw. die ausgewählte nächste Fahrspur, eine Reichweitenanzeige oder eine persönliche Checkliste sein. Ebenso kann ein Bedienelement auf einem Touchscreen angezeigt werden, dessen Bedienfunktion die Bestätigung des automischen Wendemanövers ist.

In einer bevorzugten Ausgestaltung umfasst die landwirtschaftliche Arbeitsmaschine ein automatisches Lenksystem und ein Trigger ist eine Aktivierung des automatischen Lenksystems.

In einer bevorzugten Ausgestaltung umfasst die landwirtschaftliche Arbeitsmaschine ein Taskmanagementsystem und ein Trigger ist ein Start eines Task. In einer weiteren Ausgestaltung können unterschiedliche Tasks als verschiedene Trigger genutzt werden.

In einer bevorzugten Ausgestaltung ist die Recheneinheit dazu vorgesehen und eingerichtet dem Nutzer eine Vielzahl an Anzeigebereichen mittels der Anzeigeeinheit anzubieten, über die Bedieneinheit eine Auswahl von eines Anzeigebereichs entgegenzunehmen und den ausgewählten Anzeigebereich mit dem ausgewählten Anzeigeobjekt so zu verknüpfen, dass bei Eintreten des mindestens einen ausgewählten Triggers das mindestens eine ausgewählte Anzeigeobjekt in dem verknüpften Anzeigebereich auf dem Display in der landwirtschaftlichen Arbeitsmaschine angezeigt wird.

Durch die Verknüpfung der Anzeigeobjekte mit Anzeigebereichen kann nicht nur ausgewählt werden welche Anzeigeobjekte angezeigt werden, sondern auch wo die Anzeigeobjekte angezeigt werden. Dies ermöglicht eine wesentlich individuellere Anzeige von Anzeigeobjekten. Die Anzeigebereiche können prinzipiell in Lage, Größe und Ausrichtung frei wählbar sein. Bevorzugt wird dem Nutzer eine Vielzahl disjunkter Anzeigebereiche mit festen Positionen und Größen zur Auswahl vorgegeben. Dadurch wird sichergestellt, dass die Anzeigeobjekte sich nicht überlappen und die Anzeigebereiche groß genug für die Anzeigeobjekte sind.

In einer bevorzugten Ausgestaltung ist ein Anzeigeobjekt ein vorgegebener oder vom Nutzer mittels der Bedieneinheit einzugebender Text. Vorgegebene Texte können bspw. Anleitungen oder Checklisten sein. So kann dem Nutzer beim Ankoppeln eines Anbaugerätes eine Anleitung zur Nutzung des Anbaugerätes angezeigt werden oder beim Erreichen eines Feldes kann eine Checkliste angezeigt werden.

In einer bevorzugten Ausgestaltung ist ein Anzeigeobjekt ein Bedienelement, insbesondere ein virtuelles Bedienelement auf einem Touchscreen. Ein Bedienelement kann bspw. ein Button oder ein Slider sein.

In einer bevorzugten Ausgestaltung ist ein Anzeigeobjekt ein Leistungsparameter der Arbeitsmaschine. Leistungsparameter können bpsw. der Kraftstoffverbrauch, die Erntemenge, die Erntefeuchte oder der Bruchkornanteil sein.

In einer bevorzugten Ausgestaltung ist ein Anzeigeobjekt eine Anbaugeräteanzeige, insbesondere eine ISOBUS-Anzeige. Durch die Verknüpfung der Anbaugeräteanzeige mit einem Trigger wird die Anbaugeräteanzeige nur angezeigt, wenn sie vom Nutzer benötigt wird. Die Anbaugeräteanzeige kann bspw. mit dem Erreichen des Feldes, mit dem Start eines Task oder mit dem Absenken des Anbaugerätes verknüpft werden.

In einer bevorzugten Ausgestaltung weist die landwirtschaftliche Arbeitsmaschine mindestens ein Geolokalisationssystem, insbesondere ein GNSS, auf und ein Trigger das Erreichen oder Verlassen eines ausgewählten räumlichen Bereichs ist. Der räumliche Bereich kann bspw. vom Nutzer in einer Karte ausgewählt werden oder von einem Farm Management Informations-System (FMIS) übernommen werden.

In einer bevorzugten Ausgestaltung ist die Recheneinheit dazu vorgesehen und eingerichtet ist dem Nutzer mittels der Anzeigeeinheit eine Vielzahl an geografischen Bereichen mittels der Anzeigeeinheit anzubieten, über die Bedieneinheit eine Auswahl eines geografischen Bereichs entgegenzunehmen, und dem Nutzer mittels der Anzeigeeinheit das Erreichen und/oder das Verlassen des ausgewählten geografischen Bereichs als Trigger anzubieten. Die angebotenen geografischen Bereiche können bspw. Felder sein, deren Grenzen aus einem Farm Management Informations-Systems (FMIS) übernommen werden.

Die Erfindung wird nachstehend anhand eines Ausführungsbeispiels näher erläutert. Die Figuren zeigen in
- Fig. 1:: Eine landwirtschaftliche Arbeitsmaschine,
- Fig. 2:: Ein Ablaufschema einer Konfiguration,
- Fig. 3:: Einen Fahrweg mit Triggern,
- Fig. 4:: Ein Display mit konfigurierten Anzeigeobjekten,
- Fig. 5:: Ein weiteres Display mit konfigurierten Anzeigeobjekten.

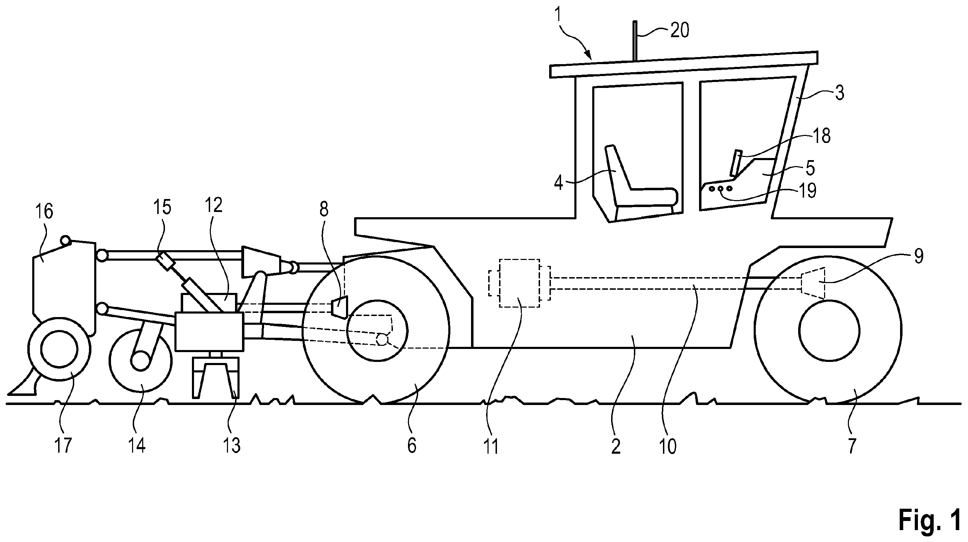

Die Fig. 1 zeigt eine landwirtschaftliche Arbeitsmaschine 1, hier einen Ackerschlepper, mit einem Fahrgestell 2 und einer sich von diesem nach oben hin erstreckenden Fahrerkabine 3. In der Fahrerkabine 3 ist ein Sitz 4 für die Bedienperson sowie eine Bedienerkonsole 5 mit einer Recheneinheit, die auch als Triggerüberwachungseinheit dient, wobei an der Bedienerkonsole ein Display 18 und Bedienelemente 19 angeordnet sind. Wird die Konfiguration der Triggerüberwachungseinheit über die Bedienerkonsole 5 vorgenommen, so dient das Display 18 als Anzeigeeinheit und die Bedienelemente 19 als Bedieneinheit. Die Triggerüberwachungseinheit kann auch über einen externen Computer mit eigener Anzeigeeinheit und Bedieneinheit erfolgen. Ein nicht dargestellter Antrieb ist in einem Teil des Fahrgestells 2 zwischen Hinterrädern 6 und Vorderrädern 7 angeordnet. Der Antriebsmotor dient zum Antreiben der Hinterräder 6 und der Vorderräder 7 einerseits und zum Antrieb einer hinteren Zapfwelle 8 und einer vorderen Zapfwelle 9.

Die vordere Zapfwelle 9 ist mit einem eine Weile aufweisenden Führungsrohr 10 über ein Getriebe 11 mit dem Antriebsmotor verbunden. Die hintere Zapfwelle 8 ist ebenfalls über ein Getriebe mit dem Antriebsmotor verbunden. An der Zapfwelle 8 ist eine Kreuzgelenkwelle 12 angeschlossen, über die eine Kreiselegge 13 angeschlossen ist. Hinter der Kreiselegge 13 ist eine Nachlaufwalze 14 angeordnet, mit der die Arbeitstiefe der Kreiselegge 13 eingestellt werden kann. Die Kreiselegge 13 ist rückseitig mit weiteren Huborganen 15 ausgestattet, an die, wie aus Fig. 1 zu ersehen ist, eine Sämaschine 16 mit abstützenden Laufrädern 17 angeschlossen ist. Der Ackerschlepper 1 weist eine Autopilot-Funktion auf, die es ermöglicht, dass der Ackerschlepper 1 von einem Feldende zum anderen Feldende ohne Einflussnahme durch die Bedienperson selbsttätig fahrend und lenkend gesteuert wird. Dazu befindet sich auf dem Dach der Fahrerkabine 3 eine GNSS-Antenne 20.

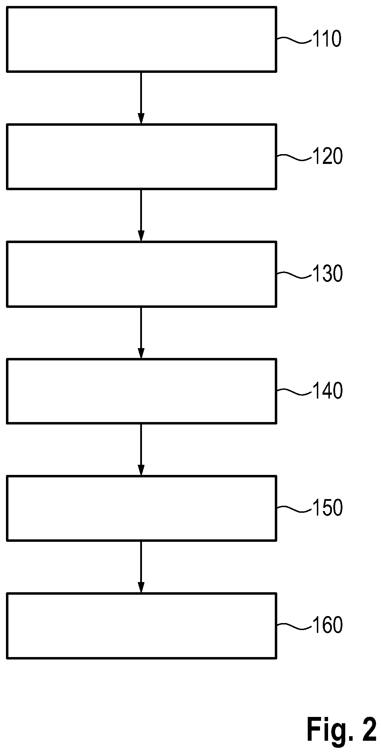

Figur 2 zeigt ein Ablaufschema einer Konfiguration. Dieses Verfahren wird von einer Recheneinheit durchgeführt. Die Recheneinheit kann Teil der Arbeitsmaschine sein, bspw. als Teil der Bedienerkonsole 14, oder in einem Computer, Tablet oder Smartphone sein. Die Recheneinheit wird mittels eines Programmes oder einer App zu Durchführung dieses Verfahrens eingerichtet. In einem ersten Schritt 110 wird dem Nutzer mittels der Anzeigeeinheit eine Vielzahl an Anzeigeobjekten zur Auswahl angeboten. Anzeigeobjekte kann bspw. die mittels GNSS ermittelte Position der Arbeitsmaschine 1, die Drehzahl des Antriebsmotors, die Arbeitstiefe der Kreiselegge 13 oder die Hubposition der Sämaschine 16 sein. Die Anzeigeeinheit kann bspw. ein Display 18 auf der Arbeitsmaschine sein. Alternativ kann die Anzeigeeinheit auch ein Monitor eines Computers oder ein Bild schirm eines Tablets oder Smartphone sein. Neben den Anzeigeobjekten können dem Nutzer auch Anzeigebereiche zur Auswahl angeboten werden. Dem Nutzer werden Bedienfunktionen und Bedienelemente angeboten. Der Nutzer kann auswählen welche Bedienfunktion mit welchem Bedienelement 19 verknüpft werden soll.

In einem zweiten Schritt 120 wird über die Bedieneinheit eine Auswahl zumindest eines Anzeigeobjektes entgegengenommen. Die Bedieneinheit kann bspw. diverse Bedienelemente 19 oder einen Touchscreen 18 der Arbeitsmaschine umfassen. Alternativ kann die Bedieneinheit eine Tastatur, eine Maus oder einen Touchscreen eines Tablets oder eines Smartphones umfassen. Falls dem Nutzer Auswahlbereiche angeboten wurden wird zu jedem ausgewählten Anzeigeobjekt die Auswahl eines Anzeigebereichs entgegengenommen. Die ausgewählten Anzeigeobjekte und ggf. zugehörigen Anzeigebereiche werden gespeichert. Falls dem Nutzer Bedienfunktionen und Bedienelemente angeboten wurden wird die ausgewählte Bedienfunktion und das ausgewählte Bedienelement gespeichert.

In einem dritten Schritt 130 wird dem Nutzer mittels der Anzeigeeinheit eine Vielzahl an Triggern zur Auswahl angeboten. Ein Trigger kann bspw. ein geografischer Bereich, die Aktivierung einer Maschinenfunktion, die Betätigung eines Bedienelementes oder die Über- oder Unterschreitung eines Grenzwertes eines Sensors der Arbeitsmaschine oder eines Anbaugerätes sein. Dabei kann dem Nutzer auch die Verknüpfung von Triggern mit logischen Operatoren angeboten werden.

In einem vierten Schritt 140 wird über die Bedieneinheit eine Auswahl zumindest eines Triggers entgegengenommen. Der ausgewählte Trigger bzw. die mit logischen Operatoren zu einem logischen Ausdruck verknüpften Trigger werden mit dem ausgewählten Anzeigeobjekt bzw. den ausgewählten Anzeigeobjekten verknüpft und gespeichert. Der Trigger wird ggf. auch mit der ausgewählten Bedienfunktion und dem ausgewählten Bedienelement verknüpft.

In einem fünften Schritt 150 wird eine Triggerüberwachungseinheit so konfiguriert, dass sie den ausgewählten Trigger überwacht. Die Triggerüberwachungseinheit kann ein Teil der Bedienerkonsole 5 der Arbeitsmaschine sein.

In einem sechsten Schritt 160 detektiert die Triggerüberwachungseinheit 5, dass der überwachte Trigger aktiv ist. Daraufhin wird das mit dem überwachten Trigger verknüpfte Anzeigeobjekt auf dem Display 18 angezeigt. Das Anzeigeobjekt wird ggf. in dem ausgewählten Anzeigebereich angezeigt. Bei Auswahl einer Bedienfunktion und einem Bedienelement 19 wird das ausgewählte Bedienelement 19 mit der ausgewählten Bedienfunktion belegt, sodass der Nutzer mit dem ausgewählten Bedienelement 19 die ausgewählte Bedienfunktion steuern kann.

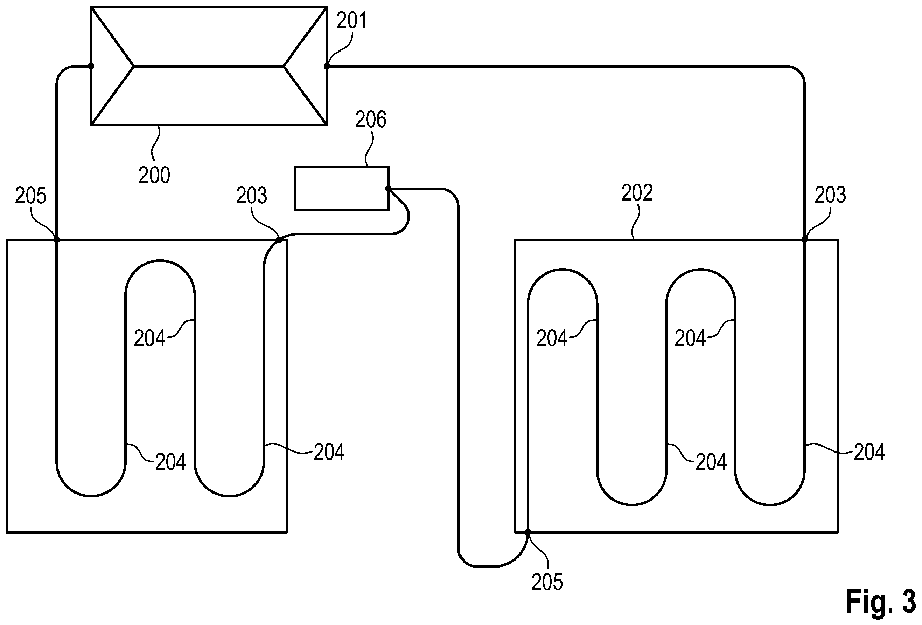

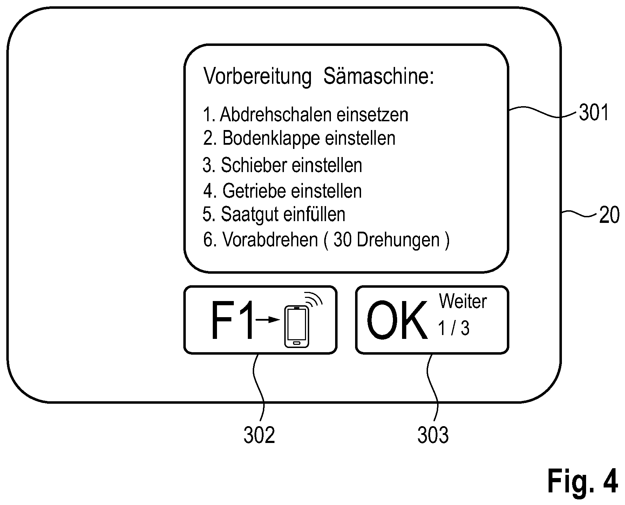

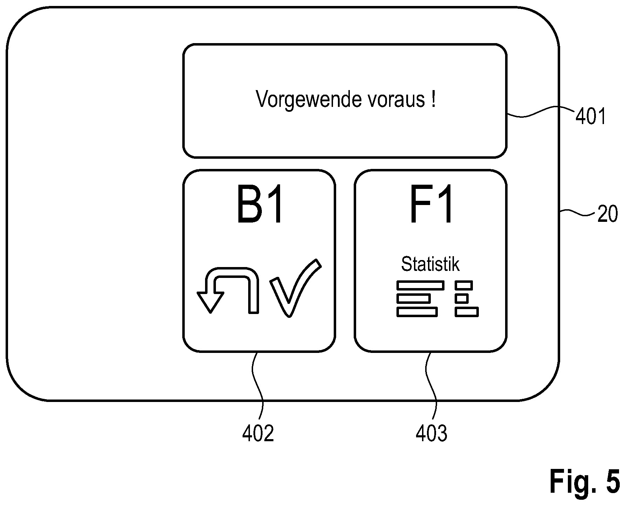

Figur 3 zeigt einen Fahrweg mit Triggern. Die ersten fünf Schritte des oben beschriebenen Verfahrens werden vor der Fahrt der Arbeitsmaschine ausgeführt. Während der Fahrt überwacht die Triggerüberwachungseinheit 5 die ausgewählten Trigger und veranlasst bei aktivierten Triggern die Anzeige der ausgewählten Anzeigeobjekte. Der Fahrweg der Arbeitsmaschine 1 beginnt an einem Startpunkt 201 an einem Hof 200. Der Start der Arbeitsmaschine 1 ist der erste Trigger und die mit dem ersten Trigger verknüpften Anzeigeobjekte werden auf einem Display 18 der Arbeitsmaschine angezeigt. Ein Beispiel für eine vom Nutzer vor Arbeitsbeginn konfigurierte Anzeige, welche beim ersten Trigger angezeigt wird, findet sich in Figur 4. Die Arbeitsmaschine 1 wird zu einem Feld 202 gefahren. Wenn mittels des GNSS 20 erkannt wird, dass die Arbeitsmaschine 1 an einer Einfahrt 203 zum Feld angekommen ist wird der zweite Trigger aktiv und die mit dem zweiten Trigger verknüpften Anzeigeobjekte auf einem Display 18 angezeigt. In der Nähe zum Vorgewende 204 wird der dritte Trigger aktiv und die mit dem dritten Trigger verknüpften Anzeigeobjekte auf einem Display 18 angezeigt. Ein Beispiel für eine vom Nutzer vor Arbeitsbeginn konfigurierte Anzeige, welche beim dritten Trigger angezeigt wird, findet sich in Figur 5. An der Ausfahrt 205 des Feldes wird der vierte Trigger aktiv und die mit dem vierten Trigger verknüpften Anzeigeobjekte auf einem Display 18 angezeigt. In der Nähe einer Nachfüllstation 206 wir der fünfte Trigger aktiv und die mit dem fünften Trigger verknüpften Anzeigeobjekte auf einem Display 18 angezeigt.

Figur 4 zeigt eine konfigurierte Anzeige. Das Display 18 zeigt bei dieser vorbereiteten Anzeige in einem ersten Anzeigebereich 301 einen vorbereiteten Text. Der Text ist in diesem Beispiel eine Anleitung zur Vorbereitung der Sämaschine 16. In einem zweiten Anzeigebereich 302 wird ein Bedienelement angezeigt. In einem dritten Anzeigebereich 303 wird ein weiteres Bedienelement angezeigt. Das Display 18 ist ein Touchscreen, sodass die Bedienelemente direkt über das Display 18 bedient werden können. Die so konfigurierte Anzeige wird mit dem ersten Trigger verknüpft und beim Starten der Arbeitsmaschine 1 am Startpunkt 201 angezeigt.

Figur 5 zeigt eine weitere konfigurierte Anzeige. Das Display 18 zeigt bei dieser vorbereiteten Anzeige in einem ersten Anzeigebereich 401 einen Text, der auf das Nahe Vorgewende hinweist. In einem zweiten Anzeigebereich 402 wird angezeigt, dass ein Schalter mit einer Funktion belegt wurde. In diesem Fall wird ein Schalter 19 mit der Bestätigung der automatischen Wende belegt. Der Fahrer kann nun über die Betätigung des Schalters 19 die automatische Wende bestätigen. In einem dritten Anzeigebereich 403 wird ein Bedienelement angezeigt. Über das angezeigte Bedienelement können Statistiken zu vorherigen automatischen Wenden angezeigt werden. Das Bedienelement kann direkt über den Touchscreen 18 bedient werden. Die so konfigurierte Anzeige wird mit dem dritten Trigger verknüpft und kurz vor Erreichen des Vorgewendes angezeigt.

### Bezugszeichenliste

- 1: Arbeitsmaschine
- 2: Fahrgestell
- 3: Fahrerkabine
- 4: Sitz
- 5: Bedienerkonsole mit Recheneinheit und Triggerüberwachungseinheit
- 6: Hinterräder
- 7: Vorderräder
- 8: Hintere Zapfwelle
- 9: Vordere Zapfwelle
- 10: Führungsrohr
- 11: Getriebe
- 12: Kreuzgelenkwelle
- 13: Kreiselegge
- 14: Nachlaufwalze
- 15: Huborgan
- 16: Sämaschine
- 17: Laufräder
- 18: Display
- 19: Bedienelement
- 20: GNSS-Antenne
- 110: Erster Schritt
- 120: Zweiter Schritt
- 130: Dritter Schritt
- 140: Vierter Schritt
- 150: Fünfter Schritt
- 160: Sechster Schritt
- 200: Hof
- 201: Startpunkt
- 202: Feld
- 203: Einfahrt
- 204: Nähe Vorgewende
- 301, 302, 303: Anzeigebereiche
- 401, 402, 403: Anzeigebereiche

## Patentansprüche

1. System zur Anzeige von Anzeigeobjekten auf einem Display (18) in einer landwirtschaftlichen Arbeitsmaschine (1), umfassend
eine Anzeigeeinheit (18),
eine Bedieneinheit (19) und
eine Recheneinheit (5), die dazu vorgesehen und eingerichtet ist mittels der Anzeigeeinheit (18) eine Vielzahl von Anzeigeobjekten anzubieten (110) und mittels der Bedieneinheit (19) eine Auswahl von zumindest einem Anzeigeobjekt entgegenzunehmen (120),
**gekennzeichnet dadurch, dass**
die Recheneinheit (5) dazu vorgesehen und eingerichtet ist mittels der Anzeigeeinheit (18) eine Vielzahl von Triggern anzubieten (130) und mittels der Bedieneinheit (19) eine Auswahl von zumindest einem Trigger entgegenzunehmen (140) und den ausgewählten Trigger mit dem ausgewählten Anzeigeobjekt zu verknüpfen,
wobei die Recheneinheit (5) dazu vorgesehen und eingerichtet ist eine Triggerüberwachungseinheit (5) auf eine Überwachung des zumindest einen ausgewählten Triggers zu konfigurieren (150),
und die Triggerüberwachungseinheit dazu vorgesehen und eingerichtet ist bei einer Aktivierung des überwachten Triggers eine Anzeige des mit dem überwachten Trigger verknüpften Anzeigeobjektes auf dem Display (18) in der landwirtschaftlichen Arbeitsmaschine (1) auszulösen (160), wobei die landwirtschaftliche Arbeitsmaschine (1) eine Vielzahl an Bedienelementen (19) und eine Vielzahl an Bedienfunktionen aufweist und
die Recheneinheit (30) dazu vorgesehen und eingerichtet ist dem Nutzer eine Vielzahl an Bedienelementen mittels der Anzeigeeinheit anzubieten (110),
über die Bedieneinheit eine Auswahl von einem Bedienelement und einer Bedienfunktion entgegenzunehmen (120),
die ausgewählte Bedienfunktion und das ausgewählte Bedienelement mit dem ausgewählten Trigger so zu verknüpfen (160), dass
bei Eintreten des mindestens einen ausgewählten Triggers die ausgewählte Bedienfunktion mit dem ausgewählten Bedienelement aktiviert werden kann.

2. System nach Anspruch 1, **dadurch gekennzeichnet, dass** die Recheneinheit (5) dazu vorgesehen und eingerichtet ist
dem Nutzer eine Vielzahl an logischen Operatoren mittels der Anzeigeeinheit (18) zur Verknüpfung mit einem oder mehreren ausgewählten Triggern zu einem logischen Ausdruck anzubieten (130),
über die Bedieneinheit (19) eine Auswahl von logischen Operatoren und Verknüpfungen entgegenzunehmen (140),
eine Verknüpfung der ausgewählten Trigger mit den logischen Operatoren zu einem logischen Ausdruck vorzunehmen, und
den logischen Ausdruck als ausgewählten Trigger zu speichern.

3. System nach einem der vorhergehenden Ansprüche, **dadurch gekennzeichnet, dass** die Recheneinheit (5) dazu vorgesehen und eingerichtet ist dem Nutzer eine Vielzahl an logischen Ausdrücken mittels der Anzeigeeinheit (18) anzubieten (130) und
über die Bedieneinheit (19) eine Auswahl von zumindest einem logischen Ausdruck entgegenzunehmen (140) und
den logischen Ausdruck als ausgewählten Trigger zu speichern.

4. System nach einem der vorhergehenden Ansprüche, **dadurch gekennzeichnet, dass** die landwirtschaftliche Arbeitsmaschine (1) zumindest ein Bedienelement (19) aufweist und ein Trigger eine Betätigung des Bedienelementes (19) ist.

5. System nach einem der vorhergehenden Ansprüche, **dadurch gekennzeichnet, dass** die landwirtschaftliche Arbeitsmaschine (1) mindestens eine Maschinenfunktion aufweist und der Trigger die Aktivierung der Maschinenfunktion der landwirtschaftlichen Arbeitsmaschine ist.

6. System nach einem der vorhergehenden Ansprüche, **dadurch gekennzeichnet, dass** die landwirtschaftliche Arbeitsmaschine (1) ein automatisches Lenksystem umfasst und ein Trigger eine Aktivierung des automatischen Lenksystems ist.

7. System nach einem der vorhergehenden Ansprüche, **dadurch gekennzeichnet, dass** die landwirtschaftliche Arbeitsmaschine (1) ein Taskmanagementsystem umfasst und ein Trigger ein Start eines Task ist.

8. System nach einem der vorhergehenden Ansprüche, **dadurch gekennzeichnet, dass** die Recheneinheit (30) dazu vorgesehen und eingerichtet ist dem Nutzer eine Vielzahl an Anzeigebereichen (301, 302, 303, 401, 402, 403) mittels der Anzeigeeinheit (18) anzubieten (110),
über die Bedieneinheit (19) eine Auswahl von einem Anzeigebereich (301, 302, 303, 401, 402, 403) entgegenzunehmen (120) und
den ausgewählten Anzeigebereich (301, 302, 303, 401, 402, 403) mit dem ausgewählten Anzeigeobjekt so zu verknüpfen, dass bei Eintreten des mindestens einen ausgewählten Triggers das mindestens eine ausgewählte Anzeigeobjekt an dem verknüpften Anzeigebereich (301, 302, 303, 401, 402, 403) auf dem Display (18)in der landwirtschaftlichen Arbeitsmaschine (1) angezeigt wird (160).

9. System nach einem der vorhergehenden Ansprüche, **dadurch gekennzeichnet, dass** ein Anzeigeobjekt ein vorgegebener oder vom Nutzer mittels der Bedieneinheit einzugebender Text (301, 401) ist.

10. System nach einem der vorhergehenden Ansprüche, **dadurch gekennzeichnet, dass** ein Anzeigeobjekt ein Bedienelement (302, 303), insbesondere ein virtuelles Bedienelement auf einem Touchscreen, ist.

11. System nach einem der vorhergehenden Ansprüche, **dadurch gekennzeichnet, dass** ein Anzeigeobjekt ein Leistungsparameter der Arbeitsmaschine ist.

12. System nach einem der vorhergehenden Ansprüche, **dadurch gekennzeichnet, dass** ein Anzeigeobjekt eine Anbaugeräteanzeige, insbesondere eine ISOBUS-Anzeige, ist.

13. System nach einem der vorhergehenden Ansprüche, **dadurch gekennzeichnet, dass** die landwirtschaftliche Arbeitsmaschine mindestens ein Geolokalisationssystem (20), insbesondere ein GNSS, aufweist und
ein Trigger das Erreichen oder Verlassen eines ausgewählten räumlichen Bereichs ist.

14. System nach einem der vorhergehenden Ansprüche, **dadurch gekennzeichnet, dass** die Recheneinheit (30) dazu vorgesehen und eingerichtet ist dem Nutzer eine Vielzahl an geografischen Bereichen mittels der Anzeigeeinheit (18) anzubieten,
über die Bedieneinheit (19) eine Auswahl eines geografischen Bereichs entgegenzunehmen, und
dem Nutzer mittels der Anzeigeeinheit (18) das Erreichen und/oder das Verlassen des ausgewählten geografischen Bereichs als Trigger anzubieten.

## Claims

1. System for displaying display objects on a display (18) in an agricultural working machine (1), comprising a display unit (18),
an operating unit (19), and
a computing unit (5) which is provided and configured to offer (110) a multiplicity of display objects by means of the display unit (18) and to receive (120) a selection of at least one display object by means of the operating unit (19),
**characterized in that**
the computing unit (5) is provided and configured to offer (130) a multiplicity of triggers by means of the display unit (18) and to receive (140) a selection of at least one trigger by means of the operating unit (19) and to link the selected trigger to the selected display object,
wherein the computing unit (5) is provided and configured to configure (150) a trigger monitoring unit (5) for monitoring the at least one selected trigger,
and the trigger monitoring unit is provided and configured, when the monitored trigger is activated, to initiate (160) a display of the display object linked to the monitored trigger on the display (18) in the agricultural working machine (1), wherein the agricultural working machine (1) has a multiplicity of operating elements (19) and a multiplicity of operating functions, and the computing unit (30) is provided and configured to offer (110) the user a multiplicity of operating elements by means of the display unit,
to receive (120) a selection of an operating element and an operating function via the operating unit,
to link (160) the selected operating function and the selected operating element to the selected trigger such that,
when the at least one selected trigger occurs, it is possible to activate the selected operating function with the selected operating element.

2. System according to Claim 1, **characterized in that** the computing unit (5) is provided and configured to offer (130) the user a multiplicity of logic operators by means of the display unit (18) for linking to one or more selected triggers to form a logic expression,
to receive (140) a selection of logic operators and links via the operating unit (19),
to link the selected triggers to the logic operators to form a logic expression, and
to store the logic expression as the selected trigger.

3. System according to one of the preceding claims, **characterized in that** the computing unit (5) is provided and configured
to offer (130) the user a multiplicity of logic expressions by means of the display unit (18) and
to receive (140) a selection of at least one logic expression via the operating unit (19) and
to store the logic expression as the selected trigger.

4. System according to one of the preceding claims, **characterized in that** the agricultural working machine (1) has at least one operating element (19) and a trigger is actuation of the operating element (19).

5. System according to one of the preceding claims, **characterized in that** the agricultural working machine (1) has at least one machine function and the trigger is the activation of the machine function of the agricultural working machine.

6. System according to one of the preceding claims, **characterized in that** the agricultural working machine (1) comprises an automatic steering system and a trigger is activation of the automatic steering system.

7. System according to one of the preceding claims, **characterized in that** the agricultural working machine (1) comprises a task management system and a trigger is a start of a task.

8. System according to one of the preceding claims, **characterized in that** the computing unit (30) is provided and configured
to offer (110) the user a multiplicity of display regions (301, 302, 303, 401, 402, 403) by means of the display unit (18),
to receive (120) a selection of a display region (301, 302, 303, 401, 402, 403) via the operating unit (19) and to link the selected display region (301, 302, 303, 401, 402, 403) to the selected display object in such a manner that, when the at least one selected trigger occurs, the at least one selected display object is displayed (160) in the linked display region (301, 302, 303, 401, 402, 403) on the display (18) in the agricultural working machine (1).

9. System according to one of the preceding claims, **characterized in that** a display object is predefined text or text (301, 401) to be input by the user by means of the operating unit.

10. System according to one of the preceding claims, **characterized in that** a display object is an operating element (302, 303), in particular a virtual operating element on a touchscreen.

11. System according to one of the preceding claims, **characterized in that** a display object is a performance parameter of the working machine.

12. System according to one of the preceding claims, **characterized in that** a display object is an attachment display, in particular an ISOBUS display.

13. System according to one of the preceding claims, **characterized in that** the agricultural working machine has at least one geo-localization system (20), in particular a GNSS, and a trigger is the reaching or leaving of a selected spatial region.

14. System according to one of the preceding claims, **characterized in that** the computing unit (30) is provided and configured to offer the user a multiplicity of geographical regions by means of the display unit (18), to receive a selection of a geographical region via the operating unit (19), and
to offer the user the reaching and/or leaving of the selected geographical region as a trigger by means of the display unit (18).

## Revendications

1. Système d'affichage d'objets d'affichage sur un moniteur (18) dans une machine de travail agricole (1), incluant
une unité d'affichage (18),
une unité d'utilisation (19) et
une unité de calcul (5) qui est prévue et agencée pour proposer (110), au moyen de l'unité d'affichage (18), une pluralité d'objets d'affichage et pour accepter (120), au moyen de l'unité d'utilisation (19), une sélection d'au moins un objet d'affichage,
**caractérisé en ce que**
l'unité de calcul (5) est prévue et agencée pour proposer (130), au moyen de l'unité d'affichage (18), une pluralité de déclencheurs et pour accepter (140), au moyen de l'unité d'utilisation (19), une sélection d'au moins un déclencheur et lier le déclencheur sélectionné à l'objet d'affichage sélectionné,
l'unité de calcul (5) étant prévue et agencée pour configurer (150) une unité de surveillance de déclencheur (5) en vue d'une surveillance de l'au moins un déclencheur sélectionné,
et l'unité de surveillance de déclencheur est prévue et agencée pour déclencher (160), à l'activation du déclencheur surveillé, un affichage de l'objet d'affichage lié au déclencheur surveillé sur le moniteur (18) dans la machine de travail agricole (1), la machine de travail agricole (1) comportant une pluralité d'éléments de manœuvre (19) et une pluralité de fonctions de manœuvre et l'unité de calcul (30) étant prévue et agencée pour proposer (110) à l'utilisateur une pluralité d'éléments de manœuvre au moyen de l'unité d'affichage, pour accepter (120) par l'intermédiaire de l'unité d'utilisation une sélection d'un élément de manœuvre et d'une fonction de manœuvre,
lier (160) la fonction de manœuvre sélectionnée et l'élément de manœuvre sélectionné avec le déclencheur sélectionné, de façon que,
lors de l'intervention de l'au moins un déclencheur sélectionné, la fonction de manœuvre sélectionnée puisse être activée avec l'élément de manœuvre sélectionné.

2. Système selon la revendication 1, **caractérisé en ce que** l'unité de calcul (5) est prévue et agencée pour proposer (130) à l'utilisateur une pluralité d'opérateurs logiques au moyen de l'unité d'affichage (18) pour une liaison avec un ou plusieurs déclencheurs sélectionnés en vue d'une expression logique,
accepter (140) par l'intermédiaire de l'unité d'utilisation (19) une sélection d'opérateurs logiques et de liaisons,
effectuer une liaison des déclencheurs sélectionnés avec les opérateurs logiques en vue d'une expression logique, et
mémoriser l'expression logique en tant que déclencheur sélectionné.

3. Système selon l'une des revendications précédentes, **caractérisé en ce que** l'unité de calcul (5) est prévue et agencée pour
proposer (130) à l'utilisateur une pluralité d'expressions logiques au moyen de l'unité d'affichage (18) et
accepter (140), par l'intermédiaire de l'unité d'utilisation (19), une sélection d'au moins une expression logique et
mémoriser l'expression logique en tant que déclencheur sélectionné.

4. Système selon l'une des revendications précédentes, **caractérisé en ce que** la machine de travail agricole (1) comporte au moins un élément de manœuvre (19), et un déclencheur est un actionnement de l'élément de manœuvre (19).

5. Système selon l'une des revendications précédentes, **caractérisé en ce que** la machine de travail agricole (1) comporte au moins une fonction de machine, et le déclencheur est l'activation de la fonction de machine de la machine de travail agricole.

6. Système selon l'une des revendications précédentes, **caractérisé en ce que** la machine de travail agricole (1) inclut un système directionnel automatique, et un déclencheur est une activation du système directionnel automatique.

7. Système selon l'une des revendications précédentes, **caractérisé en ce que** la machine de travail agricole (1) inclut un système de gestion de tâches, et un déclencheur est un démarrage d'une tâche.

8. Système selon l'une des revendications précédentes, **caractérisé en ce que** l'unité de calcul (30) est prévue et agencée pour
proposer (110) à l'utilisateur une pluralité de zones d'affichage (301, 302, 303, 401, 402, 403) au moyen de l'unité d'affichage (18),
accepter (120) par l'intermédiaire de l'unité d'utilisation (19) une sélection d'une zone d'affichage (301, 302, 303, 401, 402, 403) et
lier la zone d'affichage sélectionnée (301, 302, 303, 401, 402, 403) à l'objet d'affichage sélectionné, de façon que, lors de l'intervention de l'au moins un déclencheur sélectionné, l'au moins un objet d'affichage sélectionné soit affiché (160) sur la zone d'affichage liée (301, 302, 303, 401, 402, 403) sur le moniteur (18) dans la machine
de travail agricole (1).

9. Système selon l'une des revendications précédentes, **caractérisé en ce qu'**un objet d'affichage est un texte (301, 401) prescrit ou à entrer par l'utilisateur au moyen de l'unité d'utilisation.

10. Système selon l'une des revendications précédentes, **caractérisé en ce qu'**un objet d'affichage est un élément de manœuvre (302, 303), en particulier un élément de manœuvre virtuel sur un écran tactile.

11. Système selon l'une des revendications précédentes, **caractérisé en ce qu'**un objet d'affichage est un paramètre de performance de la machine de travail.

12. Système selon l'une des revendications précédentes, **caractérisé en ce qu'**un objet d'affichage est un affichage d'outil rapporté, en particulier un affichage d'ISOBUS.

13. Système selon l'une des revendications précédentes, **caractérisé en ce que** la machine de travail agricole comporte au moins un système de géolocalisation (20), en particulier un GNSS, et un déclencheur est le fait d'atteindre ou de quitter une zone spatiale sélectionnée.

14. Système selon l'une des revendications précédentes, **caractérisé en ce que** l'unité de calcul (30) est prévue et agencée pour proposer à l'utilisateur une pluralité de zones géographiques au moyen de l'unité d'affichage (18),
accepter par l'intermédiaire de l'unité d'utilisation (19) une sélection d'une zone géographique, et,
au moyen de l'unité d'affichage (18), proposer à l'utilisateur, comme déclencheur, le fait d'atteindre et ou de quitter la zone géographique sélectionnée.
